# EUROPÄISCHE PATENTANMELDUNG

(11) **EP 2 933 668 A1**
(43) Veröffentlichungstag der Anmeldung: **21.10.2015**
(21) Anmeldenummer: 15163305.4
(22) Anmeldetag: 13.04.2015
(51) Int. Cl.: G02B 6/38

(54) **STECKVERBINDERVORRICHTUNG**

(30) Priorität: 17.04.2014 DE 102014105523
(71) Anmelder: Reichle & De-Massari AG, 8620 Wetzikon (CH)
(72) Erfinder: Streiff, Claudio, 8610 Uster (CH); Eggimann, Fabian, 8057 Zürich (CH)
(74) Vertreter: Daub, Thomas

(57) **Zusammenfassung**

Die Erfindung geht aus von einer Steckverbindervorrichtung, insbesondere für einen feldkonfektionierbaren optischen Steckverbinder(10), zur Konfektionierung zumindest eines Kabels (94), mit zumindest einer Klemmeinheit (96), welche zu einer Fixierung des zumindest einen Kabels (94) vorgesehen ist.

Um eine gattungsgemäße Steckverbindervorrichtung mit vorteilhaften Eigenschaften hinsichtlich einer Konfektionierbarkeit wenigstens eines optischen Faserendes bereitzustellen, wird vorgeschlagen, dass die Steckverbindervorrichtung wenigstens zumindest eine Bedienfehlerschutzeinheit (98) umfasst, welche dazu vorgesehen ist, zumindest eine Bedienerhandlung lediglich dann zuzulassen, wenn die Fixierung des zumindest einen Kabels (94) durch die zumindest eine Klemmeinheit (96) vorliegt.

## Beschreibung

### Stand der Technik

Die Erfindung betrifft eine Steckverbindervorrichtung nach dem Oberbegriff des Anspruchs 1.

Aus der EP 0 846 965 B1 ist eine Steckverbindervorrichtung für einen feldkonfektionierbaren optischen Steckverbinder bekannt, welche eine zweiteilige Spleißeinheit zur mechanischen Spleißung zweier optischer Fasern und eine die Spleißeinheit zumindest teilweise umgebende C-förmige Federklemme umfasst. Ein separates keilförmiges Betätigungselement ist dazu vorgesehen, die Federklemme entgegen einer Federkraft zu öffnen.

Die Aufgabe der Erfindung besteht insbesondere darin, eine gattungsgemäße Steckverbindervorrichtung mit vorteilhaften Eigenschaften hinsichtlich einer Verhinderung von Bedienfehlern, insbesondere während einer Montage und/oder einer Installation, bereitzustellen. Die Aufgabe wird erfindungsgemäß durch die kennzeichnenden Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Steckverbindervorrichtung, insbesondere für einen feldkonfektionierbaren optischen Steckverbinder, zur Konfektionierung zumindest eines insbesondere elektrischen und/oder vorzugsweise optischen Kabels, mit zumindest einer Klemmeinheit, welche zu einer Fixierung des zumindest einen Kabels vorgesehen ist.

Es wird vorgeschlagen, dass die Steckverbindervorrichtung zumindest eine Bedienfehlerschutzeinheit aufweist, welche dazu vorgesehen ist, zumindest eine Bedienerhandlung, insbesondere eine Installations- und/oder Montagehandlung, lediglich dann zuzulassen, wenn die Fixierung des zumindest einen Kabels durch die zumindest eine Klemmeinheit vorliegt.

Unter einer "Steckverbindervorrichtung" soll hier und im Folgenden insbesondere ein Teil, insbesondere eine Unterbaugruppe, eines Steckverbinders, insbesondere eines Steckers und vorzugsweise eines SC-, LSH- oder LC-Steckers und/oder ein Teil eines Montagekits für einen Steckverbinder verstanden werden. Unter einem "feldkonfektionierbaren optischen Steckverbinder" soll insbesondere ein optischer Steckverbinder verstanden werden, welcher eine Konfektionierung zumindest eines freien optischen Faserendes unter Feldbedingungen gestattet. Hierbei wird das zumindest eine freie optische Faserende insbesondere mittels einer mechanischen Spleißung mit wenigstens einem Faserstummel verbunden, welcher insbesondere mit einer Ferrule vorkonfektioniert ist, wobei eine Vorkonfektionierung insbesondere unter kontrollierten Bedingungen und vorzugsweise durch Fachpersonal stattfinden kann.

Unter einem "Kabel" soll in diesem Zusammenhang insbesondere ein insbesondere mit zumindest einem Isolierstoff ummantelter ein- oder mehradriger Verbund von elektrischen und/oder optischen Leitern verstanden werden, welcher insbesondere einer Übertragung von Energie und/oder Information dient. Unter einer "Klemmeinheit" soll in diesem Zusammenhang insbesondere eine Einheit verstanden werden, welche dazu vorgesehen ist, das zumindest eine Kabel und/oder zumindest einen Teil, insbesondere eine Ader, des zumindest einen Kabels innerhalb der Steckverbindervorrichtung zu fixieren und/oder ein Herausrutschen und/oder ein insbesondere unerwünschtes Herausziehen des zumindest einen Kabels aus der Steckverbindervorrichtung zumindest weitgehend zu verhindern. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Bedienfehlerschutzeinheit" soll in diesem Zusammenhang insbesondere eine Einheit verstanden werden, welche dazu vorgesehen ist, eine Fehlbedienung der Steckverbindervorrichtung, insbesondere eine unvollständige und/oder fehlerhafte Montage und/oder Konfektionierung, durch einen Bediener zumindest weitgehend zu vermeiden. Darunter, dass die eine Bedienfehlerschutzeinheit "eine Bedienerhandlung lediglich dann zulässt, wenn die Fixierung des zumindest einen Kabels durch die zumindest eine Klemmeinheit vorliegt", soll insbesondere verstanden werden, dass zumindest eine insbesondere abschließende Montagehandlung, insbesondere zu einer Fertigstellung des zumindest einen Steckverbinders und/oder eine Installationshandlung, insbesondere ein Einführen des zumindest einen Steckverbinders in zumindest eine korrespondierende Steckbuchse, solange, vorzugsweise mechanisch, verhindert wird, bis eine Sicherung des zumindest einen Kabels innerhalb der Steckverbindervorrichtung durch eine Fixierung durch die zumindest eine Klemmeinheit hergestellt ist.

Durch eine solche Ausgestaltung kann eine Steckverbindervorrichtung bereitgestellt werden, welche vorteilhafte Eigenschaften hinsichtlich einer Verhinderung von Bedienfehlern, insbesondere während einer Montage und/oder einer Installation, aufweist. Insbesondere kann vorteilhaft eine fehlerhafte und/oder unvollständige Montage und/oder Installation und/oder Inbetriebnahme der Steckverbindervorrichtung und/oder eines Steckverbinders mit einer erfindungsgemäßen Steckverbindervorrichtung verhindert werden. Hierdurch kann eine Bediensicherheit und/oder eine Zuverlässigkeit vorteilhaft gesteigert und/oder eine Ausfallrate vorteilhaft reduziert werden.

Ferner wird vorgeschlagen, dass die zumindest eine Klemmeinheit wenigstens zu einer mechanischen Spleißung wenigstens zweier optischer Fasern vorgesehen ist, wobei insbesondere zumindest eine der wenigstens zwei optischen Fasern ein Bestandteil des zumindest einen Kabels ist. Unter einer "mechanischen Spleißung" soll in diesem Zusammenhang insbesondere eine insbesondere reversible optische Kopplung von wenigstens zwei, insbesondere entlang einer Geraden angeordneten, optischen Fasern verstanden werden, deren Enden mittels zumindest einer Spleißeinheit insbesondere derart fixiert sind, dass sie sich bei hergestellter mechanischer Spleißung in einem Spleißbereich zumindest im Wesentlichen berühren. Darunter, dass Enden von optischen Fasern sich "zumindest im Wesentlichen berühren", soll insbesondere verstanden werden, dass ein Abstand der Enden in dem Spleißbereich höchstens 15 µm, insbesondere maximal 10 µm, vorzugsweise höchstens 5 µm und besonders vorteilhaft maximal 1 µm beträgt. Unter einer "Spleißeinheit" soll insbesondere eine Einheit verstanden werden, welche zumindest ein Spleißelement mit wenigstens einer Faserführungsstruktur umfasst, welche zu einer zumindest teilweisen Fixierung wenigstens einer optischen Faser bei hergestellter mechanischer Spleißung vorgesehen ist. Unter einer "Faserführungsstruktur" eines Spleißelements soll in diesem Zusammenhang insbesondere eine Struktur, insbesondere eine Oberflächenstruktur, des Spleißelements verstanden werden, welche zu einer wenigstens teilweisen Aufnahme zumindest einer optischen Faser vorgesehen ist. Vorzugsweise ist die wenigstens eine Faserführungsstruktur zumindest teilweise als eine Nut ausgebildet, welche besonders vorteilhaft zumindest abschnittsweise einen zumindest im Wesentlichen dreieckigen, insbesondere gleichschenklig dreieckigen, Querschnitt aufweist. Unter einem "zumindest im Wesentlichen dreieckigen Querschnitt" soll in diesem Zusammenhang insbesondere ein Querschnitt verstanden werden, welcher sich mit einem Flächenanteil von höchstens 40 %, insbesondere von maximal 30 %, vorzugsweise von höchstens 20 % und besonders vorteilhaft von maximal 10 % von einer Dreieckform unterscheidet. Vorzugsweise ist eine Haupterstreckungsrichtung der wenigstens einen Faserführungsstruktur, insbesondere der Nut, zumindest im Wesentlichen parallel zu einer Haupterstreckungsrichtung der zumindest einen Spleißeinheit. Unter "zumindest im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung von höchstens 10°, insbesondere von maximal 7,5°, vorzugsweise von höchstens 5° und besonders vorteilhaft von maximal 2,5° aufweist. Unter einer "Haupterstreckungsrichtung" eines Objekts soll insbesondere eine Richtung verstanden werden, welche parallel zu einer längsten Kante eines kleinsten gedachten Quaders ist, welcher das Objekt gerade noch vollständig umschließt. Hierdurch kann auf vorteilhaft einfache und/oder zuverlässige und/oder reversible Weise eine optische Kopplung von wenigstens zwei optischen Fasern ermöglicht werden.

Des Weiteren wird vorgeschlagen, dass die zumindest eine Klemmeinheit wenigstens zu einer Klemmung zumindest eines Buffers und/oder zumindest eines Jackets des zumindest einen Kabels vorgesehen ist. Unter einem "Buffer" soll in diesem Zusammenhang insbesondere eine Schutzbeschichtung, beispielsweise eine Kunststofflackierung, einer optischen Faser innerhalb des zumindest einen Kabels verstanden werden. Unter einem "Jacket" soll in diesem Zusammenhang insbesondere eine äußere Schutzhülle des zumindest einen Kabels verstanden werden. Insbesondere ist der Buffer und/oder das Jacket dazu vorgesehen, zumindest eine optische Faser des zumindest einen Kabels auch insbesondere vor Feuchtigkeit und/oder mechanischen Beschädigungen zu schützen. Hierdurch kann das zumindest eine Kabel vorteilhaft vor einem Herausrutschen und/oder insbesondere unbeabsichtigten Herausziehen aus der Steckverbindervorrichtung gesichert werden. Ferner kann eine Zugbelastung auf die mechanische Spleißung vorteilhaft reduziert werden.

In einer bevorzugten Ausgestaltung der Erfindung wird vorgeschlagen, dass die Bedienfehlerschutzeinheit zumindest ein unverlierbares Bedienelement aufweist, welches zur Herstellung der Fixierung und insbesondere zur Herstellung der mechanischen Spleißung durch einen Bediener betätigbar ist. Unter einem "Bedienelement" soll insbesondere ein Element verstanden werden, welches zum Zwecke einer Bedienung von einem Bediener insbesondere unmittelbar anfassbar, insbesondere drückbar und/oder verschiebbar und/oder drehbar, ist. Darunter, dass das wenigstens eine Bedienelement "unverlierbar" ist, soll insbesondere verstanden werden, dass das wenigstens eine Bedienelement in einem montierten Zustand auf beliebige Weise, insbesondere auch mittelbar, befestigt ist, und insbesondere von der übrigen Steckverbindervorrichtung zumindest weitgehend untrennbar ausgebildet ist. Hierdurch kann ein Bedienkomfort vorteilhaft gesteigert werden, insbesondere da für einen Bediener eine bequeme Zugänglichkeit erreicht werden kann. Ferner kann insbesondere durch die Unverlierbarkeit des zumindest einen unverlierbaren Bedienelements eine Bediensicherheit vorteilhaft gesteigert werden.

Vorteilhaft weist die Steckverbindervorrichtung eine Gehäuseeinheit auf, wobei das zumindest eine unverlierbare Bedienelement in einem unbetätigten Zustand, insbesondere um zumindest 1 mm, vorteilhaft um zumindest 3 mm und besonders vorteilhaft um zumindest 5 mm, über eine Außenkontur der Gehäuseeinheit hinausragt. Unter einer "Gehäuseeinheit" soll in diesem Zusammenhang insbesondere eine Baueinheit verstanden werden, welche zumindest eine weitere Einheit der Steckverbindervorrichtung, insbesondere die zumindest eine Spleißeinheit, im montierten Zustand gegenüber einer Umgebung abdeckt und welche insbesondere mehrere Bauelemente umfassen kann. Vorzugsweise ist die Gehäuseeinheit zumindest im Wesentlichen geschlossen ausgebildet. Darunter, dass die Gehäuseeinheit "zumindest im Wesentlichen geschlossen" ausgebildet ist, soll insbesondere verstanden werden, dass die Gehäuseeinheit in einem montierten Zustand einen räumlichen Bereich umschließt und ein Gesamtflächeninhalt aller Ausnehmungen in einer Außenwand der Gehäuseeinheit insbesondere maximal 40 %, insbesondere höchstens 30 %, vorzugsweise maximal 20 % und besonders vorteilhaft höchstens 10 % eines Gesamtflächeninhalts der Außenwand der Gehäuseeinheit beträgt. Hierdurch kann vorteilhaft ein Einführen der Steckverbindervorrichtung und/oder eines eine erfindungsgemäße Steckverbindervorrichtung aufweisenden Steckverbinders in eine korrespondierende Steckbuchse bei unbetätigtem Bedienelement verhindert werden.

Ferner wird vorgeschlagen, dass die zumindest eine Klemmeinheit zumindest eine Spleißeinheit, welche dazu vorgesehen ist, eine mechanische Spleißung wenigstens zweier optischer Fasern herzustellen, und zumindest eine Federklemme, welche zu einer Fixierung der wenigstens zwei optischen Fasern in der zumindest einen Spleißeinheit in einer Spleißposition durch zumindest eine Federkraft vorgesehen ist, aufweist, wobei insbesondere zumindest eine der wenigstens zwei optischen Fasern ein Bestandteil des zumindest einen Kabels ist. Unter einer "Federklemme" soll in diesem Zusammenhang insbesondere eine mehrteilige oder vorzugsweise eine einteilige Klemme mit wenigstens zwei, relativ zueinander federnd ausgebildeten Federarmen verstanden werden. Vorzugsweise ist die Federklemme einstückig ausgebildet und besteht besonders vorteilhaft aus einem Federstahl. Vorzugsweise sind die wenigstens zwei Federarme einander gegenüberstehend angeordnet, wobei insbesondere zwischen den wenigstens zwei Federarmen ein Aufnahmebereich für die zumindest eine Spleißeinheit gebildet ist. Insbesondere umgreift die zumindest eine Federklemme die zumindest eine Spleißeinheit im montierten Zustand wenigstens teilweise, insbesondere auf wenigstens zwei und vorzugsweise auf zumindest drei Seiten. Vorzugsweise weist die Federklemme zumindest abschnittsweise einen zumindest im Wesentlichen C- oder U-förmigen Querschnitt auf. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Unter einem "zumindest im Wesentlichen C- oder U-förmigen Querschnitt" soll in diesem Zusammenhang insbesondere ein Querschnitt verstanden werden, welcher sich mit einem Flächenanteil von höchstens 40 %, insbesondere von maximal 30 %, vorzugsweise von höchstens 20 % und besonders vorteilhaft von maximal 10 % von einer C- oder U-Form unterscheidet. Darunter, dass die zumindest eine Federklemme "zur Fixierung der wenigstens zwei optischen Fasern in der zumindest einen Spleißeinheit" vorgesehen ist, soll insbesondere verstanden werden, dass die wenigstens zwei optischen Fasern bei hergestellter mechanischer Spleißung durch die Federkraft der zumindest einen Federklemme in der zumindest einen Spleißeinheit gehalten sind, insbesondere durch einen Reibschluss. Eine Fixierung der wenigstens zwei optischen Fasern kann dabei zwischen zumindest zwei Spleißelementen der zumindest einen Spleißeinheit erfolgen. Vorzugsweise erfolgt die Fixierung der wenigstens zwei optischen Fasern jedoch zwischen einem Spleißelement der zumindest einen Spleißeinheit und der zumindest einen Federklemme, insbesondere wenigstens einem Federarm der zumindest einen Federklemme und insbesondere unmittelbar. Hierdurch kann eine vorteilhaft zuverlässige mechanische Spleißung von wenigstens zwei optischen Fasern erreicht werden.

Des Weiteren wird vorgeschlagen, dass die zumindest eine Klemmeinheit zumindest ein mit dem zumindest einen unverlierbaren Bedienelement in Wirkverbindung stehendes, insbesondere unverlierbares, Betätigungselement aufweist, welches dazu vorgesehen ist, die zumindest eine Federklemme entgegen der Federkraft wenigstens teilweise zu öffnen. Unter einem "Betätigungselement" soll in diesem Zusammenhang insbesondere ein Element verstanden werden, welches mittelbar oder unmittelbar von einem Bediener betätigbar ist. Insbesondere ist das wenigstens eine Betätigungselement zu einem zumindest teilweisen Öffnen der wenigstens einen Federklemme wenigstens teilweise in diese einschiebbar, insbesondere zwischen die wenigstens zwei Federarme der zumindest einen Federklemme. Besonders vorteilhaft ist das wenigstens eine Betätigungselement wenigstens teilweise zwischen wenigstens einen Federarm der zumindest einen Federklemme und wenigstens ein Spleißelement der zumindest einen Spleißeinheit einschiebbar, und zwar insbesondere derart, dass das wenigstens eine Betätigungselement beim zumindest teilweisen Öffnen der zumindest einen Federklemme das wenigstens eine Spleißelement und/oder die zumindest eine Federklemme unmittelbar berührt. Darunter, dass das wenigstens eine Betätigungselement im montierten Zustand mit dem zumindest einen Bedienelement "in Wirkverbindung steht", soll insbesondere verstanden werden, dass das zumindest eine Bedienelement und das wenigstens eine Betätigungselement im montierten Zustand derart relativ zueinander angeordnet und/oder mittelbar oder unmittelbar miteinander verbunden sind, beispielsweise mittels einer Rast- und/oder Schraubverbindung und/oder vorzugsweise einstückig, dass zumindest während einer Bedienung des zumindest einen Bedienelements durch einen Bediener zwischen dem zumindest einen Bedienelement und dem wenigstens einen Betätigungselement eine Kraftübertragung in wenigstens eine Richtung erfolgt. Hierdurch kann eine vorteilhaft einfache insbesondere funktionelle Kopplung der zumindest einen Bedienfehlerschutzeinheit mit der zumindest einen Klemmeinheit erreicht werden.

In einer weiteren bevorzugten Ausgestaltungen der Erfindung wird vorgeschlagen, dass die zumindest eine Klemmeinheit zumindest eine Jacketklemmeinheit mit zumindest einem Klemmflügel, welcher zu einer Klemmung zumindest eines Buffers und/oder vorzugsweise zumindest eines Jackets des zumindest einen Kabels vorgesehen ist, und mit zumindest eine Verschiebehülse, welche dazu vorgesehen ist, den zumindest einen Klemmflügel zur Herstellung der Klemmung des zumindest eines Buffers und/oder des zumindest eines Jackets auszulenken, aufweist. Unter einem "Klemmflügel" soll in diesem Zusammenhang insbesondere ein insbesondere längliches und vorzugsweise federelastisches Klemmelement verstanden werden. Vorzugsweise umfasst die zumindest eine Jacketklemmeinheit zumindest zwei Klemmflügel, welche an gegenüberliegenden Seiten der Jacketklemmeinheit angeordnet sind. Das zumindest eine Kabel könnte insbesondere zwischen den zumindest einen Klemmflügel und einem feststehenden Element der Jacketklemmeinheit, beispielsweise einer Wandung, einführbar sein. Vorzugsweise ist das zumindest eine Kabel jedoch zwischen die zumindest zwei Klemmflügel einführbar. Unter einer "Verschiebehülse" soll in diesem Zusammenhang insbesondere eine Hülse verstanden werden, welche zur Herstellung einer Klemmung zumindest teilweise über den zumindest einen Klemmflügel schiebbar ist. Darunter, dass die zumindest eine Verschiebehülse dazu vorgesehen ist, den zumindest einen Klemmflügel "auszulenken", soll insbesondere verstanden werden, dass der zumindest eine Klemmflügel durch ein zumindest teilweises Überschieben der zumindest einen Verschiebehülse zumindest teilweise in Richtung des zumindest einen Kabels gedrückt und/oder verformt wird. Hierdurch kann auf vorteilhaft einfache Weise eine Klemmung zumindest eines Buffers und/oder zumindest eines Jackets des zumindest eines Kabels erreicht werden.

Ferner wird vorgeschlagen, dass die zumindest eine Bedienfehlerschutzeinheit zumindest ein entfernbares Bedienelement aufweist, welches vorzugsweise ausschließlich bei hergestellter Klemmung des zumindest eines Buffers und/oder des zumindest einen Jackets entfernbar ist. Insbesondere kann das zumindest eine entfernbare Bedienelement in einem ungeklemmten Zustand insbesondere durch einen Hintergriff gegen ein Entfernen verriegelt sein. Vorzugsweise hintergreift das zumindest eine entfernbare Bedienelement zumindest teilweise zumindest einen Teil der Gehäuseeinheit der Steckverbindervorrichtung. Vorzugsweise steht das zumindest eine entfernbare Bedienelement in einem unentfernten Zustand in einer Wirkverbindung mit der zumindest einen Verschiebehülse. Hierdurch kann eine vorteilhaft einfache Bedienung erreicht werden.

Des Weiteren wird vorgeschlagen, dass das zumindest eine entfernbare Bedienelement dazu vorgesehen ist, die zumindest eine Verschiebehülse zur Herstellung der Klemmung zumindest teilweise über den zumindest einen Klemmflügel zu verschieben. Insbesondere ist das zumindest eine entfernbare Bedienelement entlang zumindest eines Führungselements, insbesondere linear, verschiebbar. Insbesondere ist das zumindest eine Führungselement zumindest teilweise an der zumindest einen Gehäuseeinheit angeordnet. Vorzugsweise weist das zumindest eine Führungselement zumindest eine Führungsnut auf, entlang welcher das zumindest eine entfernbare Bedienelement verschiebbar ist. Das zumindest eine Bedienelement ist insbesondere zumindest im Wesentlichen parallel zu einer Haupterstreckungsrichtung der zumindest einen Jacketklemmeinheit verschiebbar. Hierdurch kann auf vorteilhaft einfache Weise eine Klemmung zumindest eines Buffers und/oder zumindest eines Jackets des zumindest einen Kabels hergestellt werden.

Ferner wird vorgeschlagen, dass die Steckverbindervorrichtung zumindest ein Knickschutzelement aufweist, welches erst nach einem Entfernen des zumindest einen entfernbaren Bedienelements montierbar ist. Unter einem "Knickschutzelement" soll in diesem Zusammenhang insbesondere ein vorzugsweise zumindest teilweise flexibles Element verstanden werden, welche dazu vorgesehen ist, das zumindest eine Kabel vor einer übermäßigen mechanischen Belastung, insbesondere einem Abknicken und/oder Abreißen, zu schützen und/oder einen minimalen Biegeradius festzulegen. Hierdurch kann vorteilhaft verhindert werden, dass die zumindest eine Knickschutzeinheit vor Herstellung einer Klemmung montierbar ist.

Des Weiteren wird ein Verfahren zur Feldkonfektionierung eines optischen Kabels mit einem Montagekit für einen Steckverbinder mit zumindest einer erfindungsgemäßen Steckverbindervorrichtung vorgeschlagen. Ein Buffer und/oder ein Jacket des optischen Kabels wird zumindest teilweise entfernt und somit eine optische Faser des optischen Kabels freigelegt. Die optische Faser des optischen Kabels wird von einem einem mit der zumindest einen Steckverbindervorrichtung vorkonfektionierten Faserstummel gegenüberliegend Ende in die Steckverbindervorrichtung eingeführt bis die Faserenden der optischen Faser des optischen Kabels und des Faserstummels in Kontakt stehen. Daraufhin wird durch eine Betätigung des zumindest einen unverlierbaren Bedienelements der zumindest einen Bedienfehlerschutzeinheit das zumindest eine Betätigungsmittel aus der einen Federklemme der Steckverbindervorrichtung herausgeschoben, wodurch diese geschlossen wird und die optische Faser des optischen Kabels und der Faserstummel in ihrer Position fixiert werden. Darauf folgend wird mittels des zumindest einen entfernbaren Bedienelements der Jacketklemmeinheit die zumindest eine Verschiebehülse der Jacketklemmeinheit über den zumindest einen Klemmflügel geschoben, wodurch zumindest ein Buffer und/oder zumindest ein Jacket des optischen Kabels geklemmt wird. Daraufhin wird das zumindest eine entfernbare Bedienelement entfernt und das zumindest eine Knickschutzelement montiert. Durch ein derartiges Verfahren kann eine vorteilhaft einfache und/oder schnelle und/oder zuverlässige Feldkonfektionierung einer erfindungsgemäßen Steckverbindervorrichtung erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen feldkonfektionierbaren optischen Steckverbinder mit einer erfindungsgemäßen Steckverbindervorrichtung in einem montierten Zustand,
- Fig. 2: einen Teil der Steckverbindervorrichtung mit einem als Gehäuseelement ausgebildeten Betätigungselement und ein zu konfektionierendes Faserende in einer Explosionsdarstellung,
- Fig. 3: das Betätigungselement in einer ersten Ansicht,
- Fig. 4: das Betätigungselement in einer zweiten Ansicht,
- Fig. 5: die Steckverbindervorrichtung bei hergestellter mechanischer Spleißung in einer Schnittdarstellung,
- Fig. 6: die Steckverbindervorrichtung bei aufgehobener mechanischer Spleißung in einer Schnittdarstellung,
- Fig. 7: einen weiteren Teil der Steckverbindervorrichtung mit einer Jacketklemmeinheit und ein zu konfektionierendes optisches Kabel in einer Explosionsdarstellung,
- Fig. 8: die Steckverbindervorrichtung bei aufgehobener Klemmung des optischen Kabels in einer Teilschnittdarstellung und
- Fig. 9: die Steckverbindervorrichtung bei hergestellter Klemmung des optischen Kabels in einer Teilschnittdarstellung.

### Beschreibung des Ausführungsbeispiels

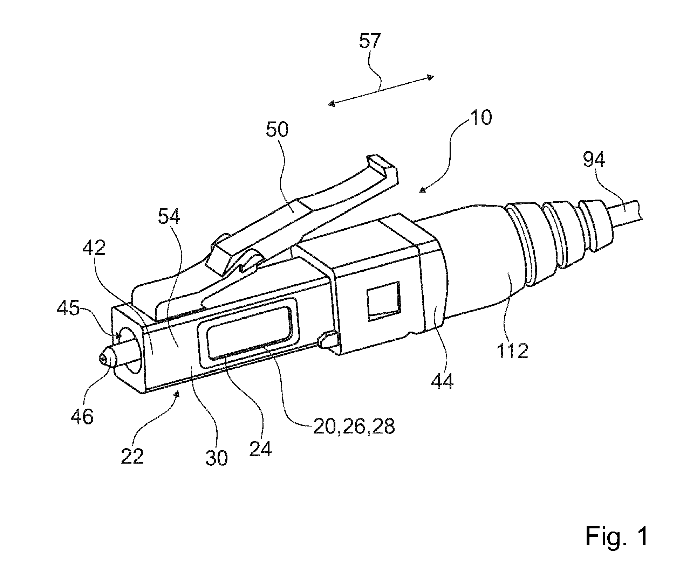

Figur 1 zeigt einen feldkonfektionierbaren optischen Steckverbinder 10 in einem montierten Zustand mit einem mit dem optischen Steckverbinder 10 konfektionierten optischen Kabel 94. Der Steckverbinder 10 ist als ein LC-Steckverbinder ausgebildet. Der Steckverbinder 10 umfasst eine erfindungsgemäße Steckverbindervorrichtung. Die Steckverbindervorrichtung umfasst eine Gehäuseeinheit 22 mit einem vorderen Gehäuseteil 42 und einem hinteren Gehäuseteil 44. Die beiden Gehäuseteile 42, 44 sind über eine Rastverbindung miteinander verbunden. Das vordere Gehäuseteil 42 weist in bekannter Weise eine Aufnahme 45 für eine Ferrule 46 auf. Am vorderen Gehäuseteil 42 ist ferner eine Rastklinke 50 angeformt, welche zu einer Verrastung in einer zum Steckverbinder 10 korrespondierenden Steckbuchse (nicht dargestellt) vorgesehen ist.

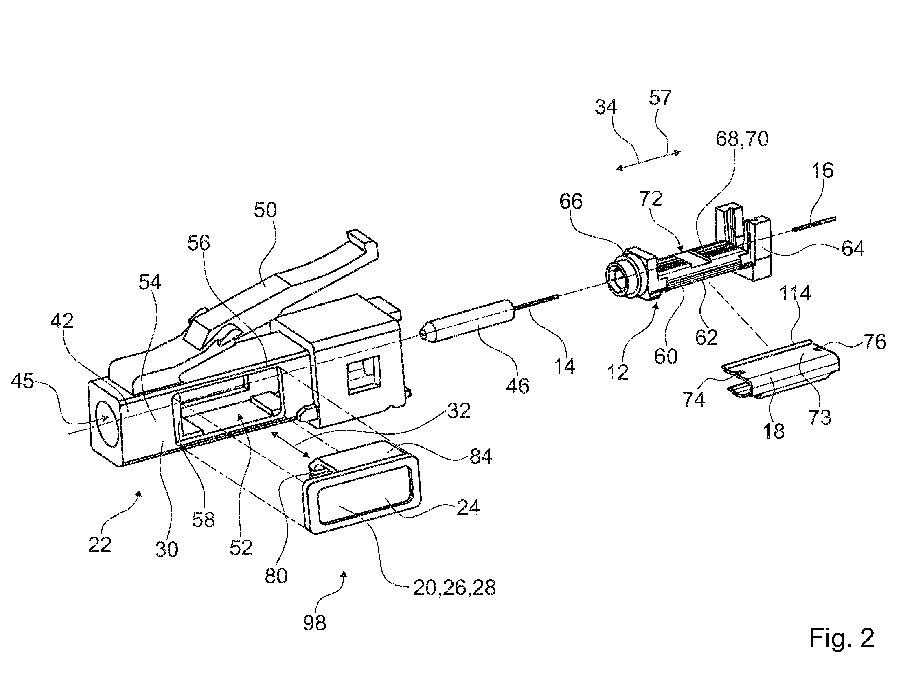

Die Steckverbindervorrichtung umfasst ferner ein Betätigungselement 20, mit dessen Hilfe ein Bediener, wie im Folgenden noch dargelegt, eine mechanische Spleißung mit einer zu konfektionierenden optischen Faser herstellen oder aufheben kann. Das Betätigungselement 20 ist einstückig mit einem vom Bediener anfassbaren und im montierten Zustand von außerhalb der Gehäuseeinheit 22 bedienbaren, unverlierbaren Bedienelement 24 einer Bedienfehlerschutzeinheit 98 (vgl. Figuren 2 bis 6) ausgeführt. Somit stehen das Betätigungselement 20 und das unverlierbare Bedienelement 24 im montierten Zustand miteinander in Wirkverbindung. Das unverlierbare Bedienelement 24 ist als ein Gehäuseelement 26 ausgebildet. Bei hergestellter mechanischer Spleißung schließt das Gehäuseelement 26 auf wenigstens einer Außenseite bündig mit der Gehäuseeinheit 22, insbesondere mit dem vorderen Gehäuseteil 42, ab. An dem hinteren Gehäuseteil 44 ist ferner ein elastisches Knickschutzelement 112 angeordnet, welches dazu vorgesehen ist, das optische Kabel 94 vor Beschädigungen, insbesondere durch übermäßige Biegebelastungen, zu schützen.

Figur 2 zeigt einen Teil der Steckverbindervorrichtung und eine zu konfektionierende optische Faser 16 des optischen Kabels 94 in einer Explosionsdarstellung. Das vordere Gehäuseteil 42 weist einen Aufnahmebereich 52 für das Betätigungselement 20 auf. Der Aufnahmebereich 52 erstreckt sich quer durch das vordere Gehäuseteil 42 und durchdringt insbesondere zwei gegenüberliegende Seitenwände 54, 56 des vorderen Gehäuseteils 42. Das unverlierbare Bedienelement 24 ist im montierten Zustand zumindest teilweise im Aufnahmebereich 52 angeordnet. Das unverlierbare Bedienelement 24 ist als ein Verschiebeteil 28 ausgebildet, welches im montierten Zustand relativ zu wenigstens einem Element 30 der Gehäuseeinheit 22, und zwar relativ zum vorderen Gehäuseteil 42, verschiebbar ausgebildet ist. Eine Verschieberichtung 32 des Verschiebeteils 28 ist senkrecht zu einer Haupterstreckungsrichtung 57 der Gehäuseeinheit 22 angeordnet. Eine der Seitenwände 54 umfasst einen verjüngten und zurückgesetzten Bereich, welcher einen Anschlag 58 für das Betätigungselement 20 bildet.

Die Steckverbindervorrichtung umfasst eine optische Faser 14, welche als Faserstummel ausgebildet und mit der Ferrule 46 vorkonfektioniert ist. Insbesondere findet eine Vorkonfektionierung unter kontrollierten Bedingungen und durch Fachpersonal statt.

Die Steckverbindervorrichtung umfasst eine Klemmeinheit 96 zur Fixierung des optischen Kabels 94. Die Klemmeinheit 96 weist eine Spleißeinheit 12 auf, welche dazu vorgesehen ist, eine mechanische Spleißung der vorkonfektionierten optischen Faser 14 mit der zu konfektionierenden optischen Faser 16 des optischen Kabels 94 herzustellen. Die Spleißeinheit 12 ist einstückig als ein Spleißelement 60 ausgebildet. Die Spleißeinheit 12 weist eine Haupterstreckungsrichtung 34 auf, welche im montierten Zustand parallel zur Haupterstreckungsrichtung 57 der Gehäuseeinheit 22 angeordnet ist. Demzufolge sind die Verschieberichtung 32 des Verschiebeteils 28 und die Haupterstreckungsrichtung 34 der Spleißeinheit 12 zueinander unter einem Winkel von 90° angeordnet. Das Spleißelement 60 umfasst ein Mittelstück 62, welches zumindest im Wesentlichen quaderförmig ausgebildet ist. An das Mittelstück 62 schließt sich an einem ersten Ende ein Kontaktelement 64 des Spleißelements 60 an, welches zu einer Kontaktierung mit weiteren Komponenten des Steckverbinders 10 vorgesehen ist (nicht dargestellt). Das Spleißelement 60 weist ferner eine Ferrulenaufnahme 66 auf, welches an einem zweiten Ende des Mittelstücks 62 anschließt und zur Aufnahme der Ferrule 46 vorgesehen ist. Im montierten Zustand ist die Ferrule 46 in der Ferrulenaufnahme 66 festgeklebt, wobei sich die vorkonfektionierte optische Faser 14 in eine Faserführungsstruktur 68 des Mittelstücks 62 hinein erstreckt. Die Faserführungsstruktur 68 ist als eine Nut 70 ausgebildet. Die Nut 70 erstreckt sich entlang des gesamten Mittelstücks 62. Die Nut 70 weist in einem mittleren Bereich einen dreieckförmigen Querschnitt auf. Die Nut 70 weist an beiden Enden des Mittelstücks 62 jeweils einen sich trichterförmig erweiternden Bereich auf, wobei in Figur 2 lediglich einer dieser Bereiche sichtbar ist. Diese sind zur Vereinfachung einer Einführung der optischen Fasern 14, 16 vorgesehen. Die optische Faser 14 erstreckt sich innerhalb der Nut 70 etwa bis zu einer Mitte 72 des Mittelstücks 62. Zur Herstellung der mechanischen Spleißung wird die zu konfektionierende optische Faser 16 des optischen Kabels 94 von der anderen Seite der Nut 70 her in diese eingeschoben, bis beide optische Fasern 14, 16 etwa in der Mitte 72 aneinander anstehen. Zusätzlich ist Index-Matching-Gel in die Nut 70a eingebracht, um optische Verluste im Bereich der mechanischen Spleißung zu verringern.

Die Klemmeinheit 96 umfasst ferner eine Federklemme 18 zur Fixierung der zwei optischen Fasern 14, 16 in der Spleißeinheit 12 in einer Spleißposition durch eine Federkraft. Die Federklemme 18 weist einen zumindest im Wesentlichen U-förmigen Querschnitt auf. Die Federklemme 18 passt unter Vorspannung über das Mittelstück 62. Im montierten Zustand umgreift die Federklemme 18 das Mittelstück 62, insbesondere auf drei Seiten. Die Federklemme 18 drückt mit einem Federarm 73 unmittelbar auf die in der Faserführungsstruktur 68 angeordneten optischen Fasern 14, 16, wodurch diese in ihrer jeweiligen Position innerhalb der Faserführungsstruktur 68 fixiert sind. Der Federarm 73 weist an beiden Enden in Bereichen, welche sich im montierten Zustand oberhalb der sich trichterförmig erweiternden Bereiche befinden, jeweils eine trichterförmige Einführhilfe 74, 76 auf, welche ebenfalls zur Vereinfachung einer Einführung der optischen Fasern 14, 16 vorgesehen sind.

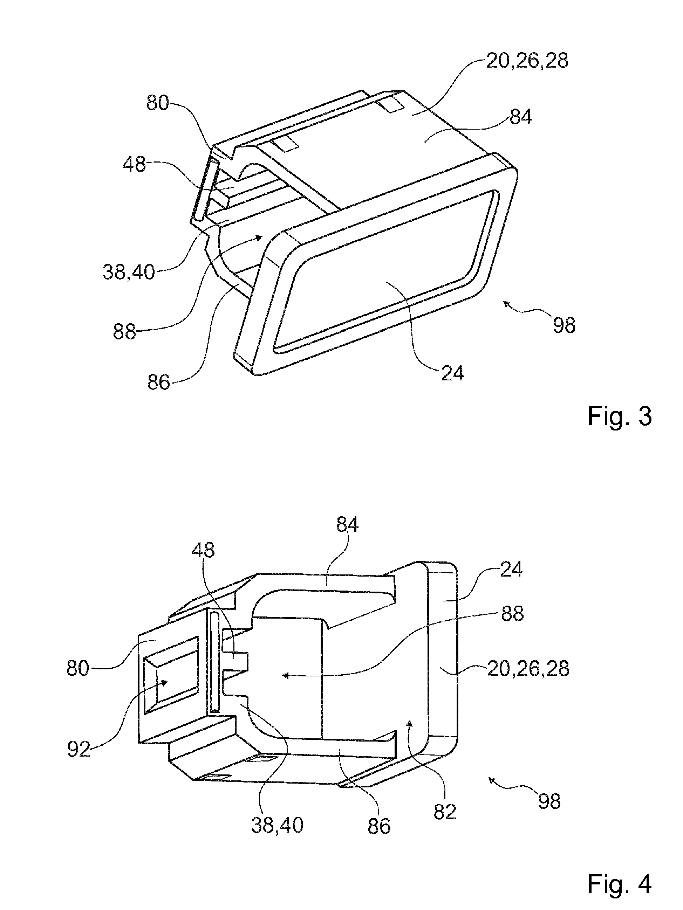

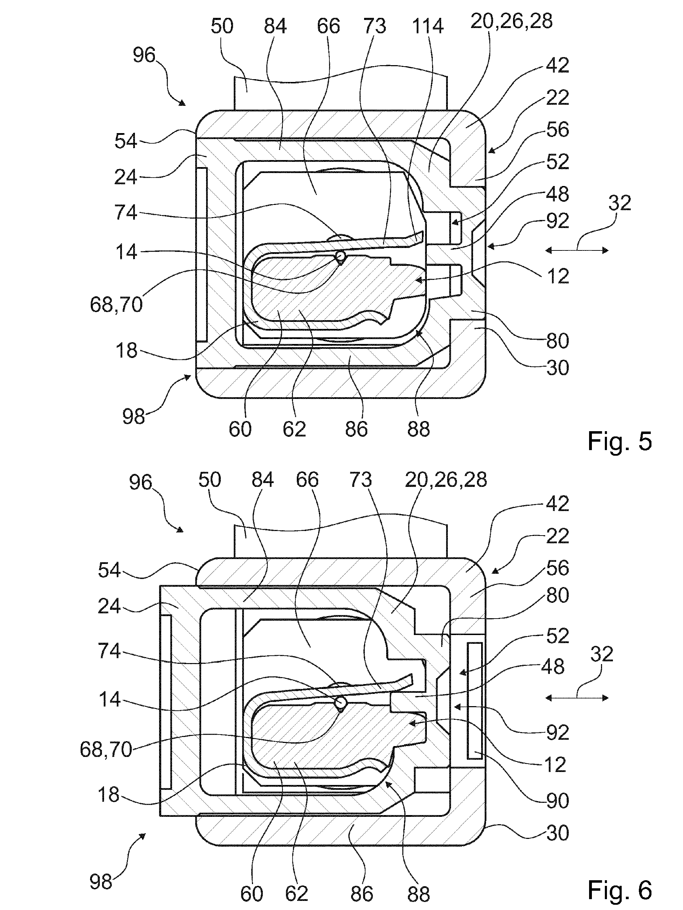

Figuren 3 und 4 zeigen zwei verschiedene Ansichten des Betätigungselements 20. Das Betätigungselement 20 ist einstückig mit dem unverlierbaren Bedienelement 24 ausgebildet. Ferner umfasst das Betätigungselement 20 ein Bedienteil 80. Das unverlierbare Bedienelement 24 und das Bedienteil 80 sind von außerhalb der Gehäuseeinheit 22 durch den Bediener anfassbar. Das unverlierbare Bedienelement 24 und das Bedienteil 80 sind jeweils zumindest im Wesentlichen plattenartig ausgebildet. Haupterstreckungsebenen des unverlierbaren Bedienelements 24 und des Bedienteils 80 sind zumindest im Wesentlichen parallel zueinander angeordnet. Die Haupterstreckungsebenen des unverlierbaren Bedienelements 24 und des Bedienteils 80 sind zumindest im Wesentlichen senkrecht zur Verschieberichtung 32 angeordnet. Das unverlierbare Bedienelement 24 weist eine größere Längserstreckung als das Bedienteil 80 auf. Das unverlierbare Bedienelement 24 weist einen Bereich 82 auf, welcher im montierten Zustand und bei hergestellter mechanischer Spleißung den Anschlag 58 an der Seitenwand 54 kontaktiert (vgl. Figur 2). Der Bereich 82 steht über das Bedienteil 80 hinaus. Das unverlierbare Bedienelement 24 und das Bedienteil 80 sind über Stege 84, 86 miteinander verbunden. Haupterstreckungsebenen der Stege 84, 86 sind zumindest im Wesentlichen parallel zueinander angeordnet. Die Haupterstreckungsebenen des unverlierbaren Bedienelements 24 und des Bedienteils 80 sind senkrecht zu den Haupterstreckungsebenen der Stege 84, 86 angeordnet. Zwischen dem unverlierbaren Bedienelement 24, dem Bedienteil 80 und den Stegen 84, 86 ist ein Aufnahmebereich 88 für die Spleißeinheit 12 und die Federklemme 18 angeordnet. Der Aufnahmebereich 88 weist einen zumindest im Wesentlichen rechteckigen, insbesondere quadratischen, Querschnitt auf. Das Betätigungselement 20 weist ein Betätigungsmittel 48 auf, welches zur Aufhebung der mechanischen Spleißung und insbesondere zu einem wenigstens teilweisen Öffnen der Federklemme 18 zwischen das Spleißelement 60 und den Federarm 73 der Federklemme 18 einführbar ist (vgl. Figuren 5 und 6). Das Betätigungsmittel 48 ist einstückig mit dem Betätigungselement 20 ausgebildet. Das Betätigungsmittel 48 ist quaderförmig ausgebildet und ragt in den Aufnahmebereich 88 hinein. Das Betätigungselement 20 weist ferner beidseitig des Bedienteils 80 jeweils ein Verriegelungselement 38 auf (lediglich eines sichtbar), welche dazu vorgesehen sind, das Betätigungselement 20 in einer geöffneten Position der zumindest einen Federklemme 18 zu verriegeln. Die Verriegelungselemente 38 sind als Rastelemente 40, insbesondere als Rastnasen, ausgebildet. Die Verriegelungselemente 38 sind unmittelbar mit dem Bedienteil 80 verbunden.

Figuren 5 und 6 zeigen die Steckverbindervorrichtung jeweils in einer Schnittdarstellung mit Blick in Richtung eines vorderen Endes des Steckverbinders 10. Figur 5 zeigt die Steckverbindervorrichtung bei hergestellter mechanischer Spleißung. Figur 6 zeigt die Steckverbindervorrichtung bei aufgehobener mechanischer Spleißung. Das als Verschiebeteil 28 ausgebildete Betätigungselement 20 ist zwischen zwei Endpositionen verschiebbar, und zwar einer Verriegelungsposition gemäß Figur 5 und einer Entriegelungsposition gemäß Figur 6. In der Verriegelungsposition (vgl. Figur 5) des Betätigungselements 20 liegt das unverlierbare Bedienelement 24 mit dem Bereich 82 am Anschlag 58 der Seitenwand 54 an (vgl. auch Figur 2). Die Federklemme 18 ist frei von äußeren Krafteinflüssen und fixiert unmittelbar die auf Anschlag eingeschobenen optischen Fasern 14, 16 in der Faserführungsstruktur 68. In der Entriegelungsposition (vgl. Figur 6) liegt das Betätigungselement 20 mit dem Bedienteil 80 an dem Spleißelement 60 an. Um ein Einführen des Betätigungsmittels 48 in die Federklemme 18 zu erleichtern und/oder um ein Verkanten und/oder Blockieren des Betätigungsmittels 48 bei einem Einführen zu verhindern, weist der Federarm 73 einen abgewinkelten Bereich 114 auf. Ferner ist das Betätigungselement 20 in der Entriegelungsposition durch das Verriegelungselement 38 mit einem korrespondierenden Verriegelungselement 90 der Gehäuseeinheit 22 verriegelt. In der Entriegelungsposition ist das Betätigungsmittel 48 des Betätigungselements 20 zwischen den Federarm 73 der Federklemme 18 und das Spleißelement 60 gepresst, so dass die Federklemme 18 entgegen der Federkraft zumindest teilweise geöffnet ist, wodurch ein vergleichsweise einfaches Einführen bzw. Entfernen der optischen Faser 16 ermöglicht ist. Das Betätigungselement 20 ist im montierten Zustand und insbesondere auch in der Verriegelungsposition unverlierbar in der Gehäuseeinheit 22 gelagert. In der Entriegelungsposition ragt das unverlierbare Bedienelement 24 über eine Außenkontur der Gehäuseeinheit 22 hinaus, wodurch eine Fehlbedienung durch ein Einführen des Steckverbinders 10 in eine korrespondierende Steckbuchse (nicht dargestellt) bei unfixierten optischen Fasern 14, 16 verunmöglicht wird.

Dadurch, dass das unverlierbaren Bedienelement 24 und das Bedienteil 80 unterschiedlich groß ausgestaltet sind, wird einerseits eine bequeme Bedienbarkeit und andererseits einer unbeabsichtigten Aufhebung der mechanischen Spleißung entgegengewirkt. Zum Herstellen der mechanischen Spleißung ist bei geöffneter Federklemme 18 zunächst die optische Faser 16 des optischen Kabels 94 durch das hintere Gehäuseteil 44 in die Faserführungsstruktur 68 des Spleißelements 60 einzuführen, bis die optische Faser 16 die optische Faser 14 innerhalb der Faserführungsstruktur 68 kontaktiert. Anschließend ist das unverlierbare Bedienelement 24 in das vordere Gehäuseteil 42 zu drücken (vgl. Figur 5). Das unverlierbare Bedienelement 24 ist von seiner Größe her derart ausgestaltet, dass eine bequeme Bedienbarkeit mit bloßen Händen möglich ist. Zum Aufheben der mechanischen Spleißung ist andererseits ein Drücken des kleineren Bedienteils 80 erforderlich (vgl. Figur 6). Dieses ist derart ausgestaltet, insbesondere mit einer zusätzlichen Einbuchtung 92, dass eine Bedienung lediglich mit Hilfe eines Werkzeugs, insbesondere eines Schraubenziehers, möglich ist.

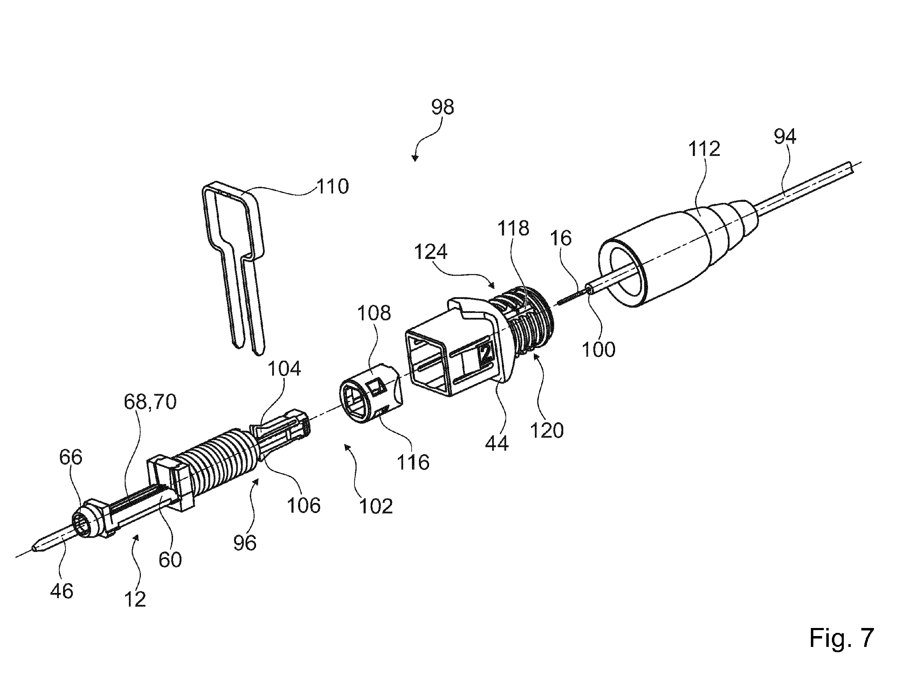

Figur 7 zeigt einen weiteren Teil der Steckverbindervorrichtung und das zu konfektionierende optische Kabel 94 in einer Explosionsdarstellung. In dem in Figur 7 dargestellten Teil weist die Klemmeinheit 96 eine Jacketklemmeinheit 102 auf, welche zu einer Klemmung eines Jackets 100 des optischen Kabels 94 vorgesehen ist. Die Jacketklemmeinheit 102 umfasst zwei Klemmflügel 104, 106. Die Klemmflügel 104, 106 sind als längliche, federelastische Klemmelemente ausgeführt. Die Klemmflügel 104, 106 sind auf gegenüberliegen Seiten der Jacketklemmeinheit 102 angeordnet. Ferner umfasst die Jacketklemmeinheit 102 eine Verschiebehülse 108, welche dazu vorgesehen ist, die Klemmflügel 104, 106 zur Herstellung einer Klemmung des Jackets 100 auszulenken. Die Verschiebehülse 108 weist zwei durchgehende Ausnehmungen 116 (lediglich eine sichtbar) auf, welche zu einer teilweisen Durchführung eines entfernbaren Bedienelements 110 der Bedienfehlerschutzeinheit 98 vorgesehen sind. Das entfernbare Bedienelement 110 ist dazu vorgesehen, die Verschiebehülse 108 zur Herstellung der Klemmung des Jackets 100 zumindest teilweise über die Klemmflügel 104, 106 zu verschieben. Das entfernbare Bedienelement 110 ist entlang zweier Nutenpaare 118 (lediglich eines sichtbar), welche in das hintere Gehäuseteil 44 eingebracht sind linear verschiebbar. Ferner weist das hintere Gehäuseteil 44 ein Gewinde 120 auf, welches zu einem Montieren des Knickschutzelements 112 vorgesehen ist.

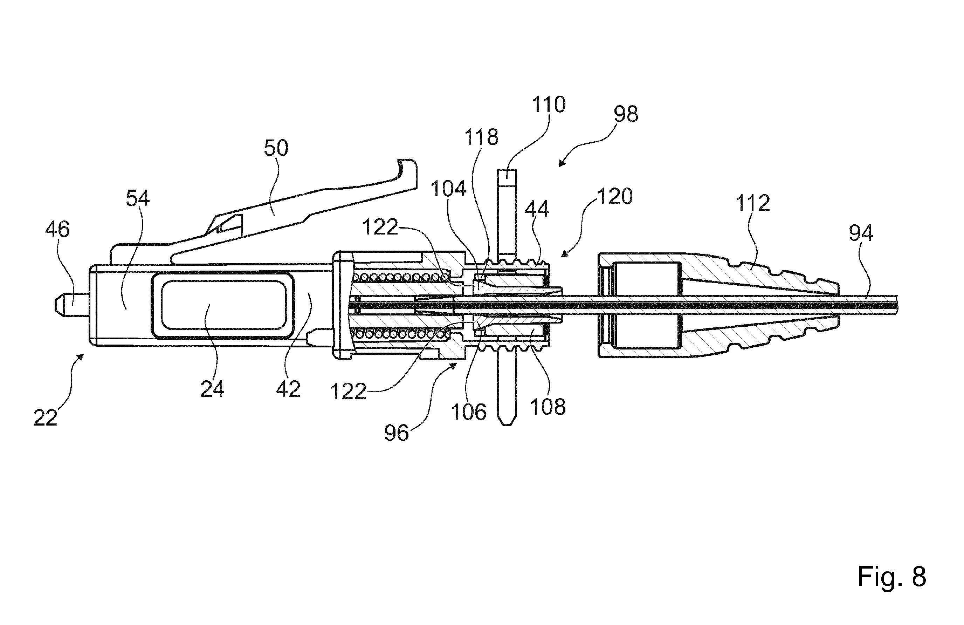

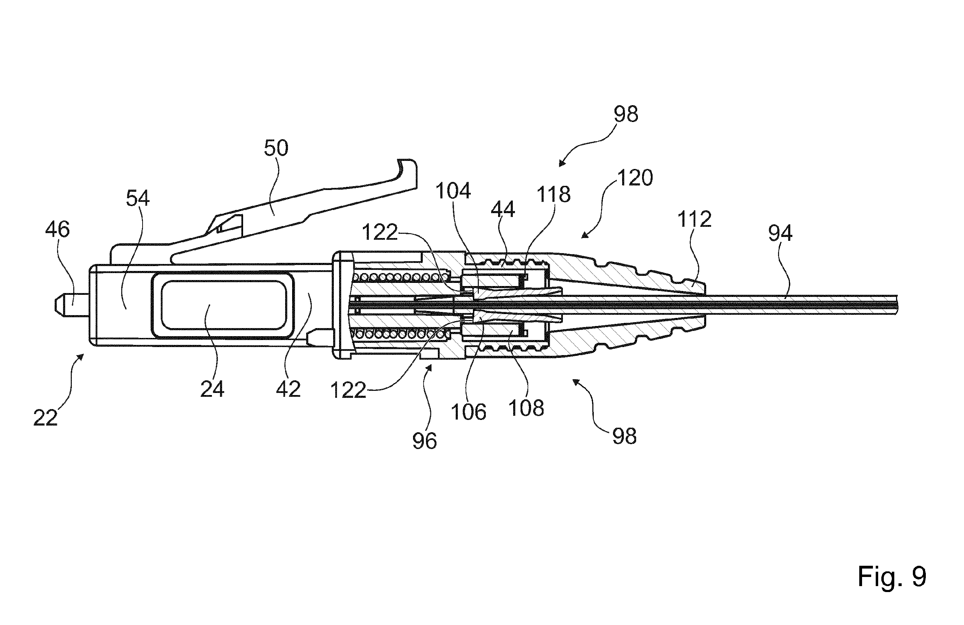

Figuren 8 und 9 zeigen die Steckverbindervorrichtung jeweils in einer seitlichen Teilschnittdarstellung. Figur 8 zeigt die Steckverbindervorrichtung bei aufgehobener Klemmung des Jackets 100. Figur 9 zeigt die Steckverbindervorrichtung bei hergestellter Klemmung des Jackets 100. Die Verschiebehülse 108 ist zwischen zwei Endpositionen verschiebbar, und zwar einer Entspannposition gemäß Figur 8 und einer Klemmposition gemäß Figur 9. In der Entspannposition (vgl. Figur 8) der Verschiebehülse 108 ist das entfernbare Bedienelement 110 durch die Nutenpaare 118 in dem hinteren Gehäuseteil 44 und die Ausnehmungen 116 der Verschiebehülse 108 hindurchgeführt. Die Nutenpaare 118 sind derart ausgebildet, dass das entfernbare Bedienelement 110 eine Wandung des hinteren Gehäuseteils 44 in der Entspannposition hintergreift und somit ein Entfernen des entfernbaren Bedienelements 110 in der Entspannposition verhindert wird. Ferner ist durch das Vorhandensein des entfernbaren Bedienelements 110 in der Entspannposition eine, insbesondere versehentliche, Montage des Knickschutzelements 112 auf das Gewinde 120 unmöglich. In der Entspannposition sind die Klemmflügel 104, 106 frei von äußeren Krafteinflüssen, wodurch ein einfaches Einführen bzw. Entfernen des optischen Kabels 94 ermöglicht ist.

In der Klemmposition (vgl. Figur 9) ist die Verschiebehülse 108 über die Klemmflügel 104, 106 geschoben. Die Klemmflügel 104, 106 sind in einem Endbereich 122 jeweils rampenförmig ausgebildet, wodurch die Klemmflügel 104, 106 durch die Verschiebehülse 108 in Richtung des optischen Kabels 94 ausgelenkt werden. In der Klemmposition ist das Jacket 100 des optischen Kabels 94 zwischen den Klemmflügeln 104, 106 geklemmt und das optische Kabel 94 somit fixiert. Eine Rückstellkraft der Klemmflügel 104, 106 wirkt auf die Verschiebehülse 108, wodurch die Verschiebehülse 108 in der Klemmposition gehalten ist. In der Klemmposition weisen die Nutenpaare 118 einen Bereich 124 mit einer größeren Breite auf. Durch die größere Breite in diesem Bereich 124 wird der Hintergriff zwischen dem entfernbaren Bedienelement 110 und der Wandung des hinteren Gehäuseteils 44 aufgelöst, wodurch das entfernbare Bedienelement 110 entfernbar ist. Somit ist das entfernbare Bedienelement 110 lediglich bei einer hergestellten Klemmung des optischen Kabels 94 durch die Jacketklemmeinheit 102 entfernbar. Eine wie in Figur 9 gezeigte Montage des Knickschutzelements 112 auf das Gewinde 120 ist erst nach einem Entfernen des entfernbaren Bedienelements 110 möglich.

Bei einer Montage des Steckverbinders 10 wird gemäß der Figuren 2 und 7 zunächst die optische Faser 14 mit der Ferrule 46 vorkonfektioniert. Ein Index-Matching-Gel wird in die Faserführungsstruktur 68 eingebracht. Anschließend wird die Federklemme 18 um das Spleißelement 60a herum angeordnet. Die Ferrule 46a wird anschließend in der Ferrulenaufnahme 66 des Spleißelements 60a verklebt, und zwar derart, dass die optische Faser 14 in der Faserführungsstruktur 68 des Spleißelements 60 angeordnet und durch die Federklemme 18 in der Faserführungsstruktur 68 fixiert ist. Anschließend wird die Jacketklemmeinheit 102 mit dem Kontaktelement 64 des Spleißelements 60 verbunden, insbesondere durch eine Rastverbindung. Das Betätigungselement 20 wird in das vordere Gehäuseteil 42 der Gehäuseeinheit 22 eingeführt. Anschließend wird das Spleißelement 60 zusammen mit der vormontierten Federklemme 18, der vormontierten und vorkonfektionierten optischen Faser 14 und den weiteren vormontierten Komponenten mit der Ferrule 46 voran in das vordere Gehäuseteil 42 und in den Aufnahmebereich 88 des Betätigungselements 20 eingeführt. Anschließend wird die Verschiebehülse 108 auf die Jacketklemmeinheit 102 aufgeschoben. Das hintere Gehäuseteil 44 der Gehäuseeinheit 22 wird anschließend aufgeschoben und mit dem vorderen Gehäuseteil 42 verrastet. Das entfernbare Bedienelement 110 wird durch die Nutenpaare 118 und die Ausnehmungen 116 der Verschiebehülse 108 geführt und die Verschiebehülse 108 in die Entspannposition gemäß Figur 8 verschoben.

Bei einer Feldkonfektionierung des optischen Kabels 94 mit dem Steckverbinder 10 wird zunächst das optische Kabel 94 durch das Knickschutzelement 112 hindurchgeführt. Daraufhin wird ein Jacket 100 des optischen Kabels 94 teilweise entfernt und somit die optische Faser 16 freigelegt. Das optische Kabel 94 wird zwischen die Klemmflügel 104, 106 der Jacketklemmeinheit 102 eingeführt. Die optische Faser 16 wird von einem der Ferrule 46 gegenüberliegend Ende in die Steckverbindervorrichtung eingeführt. Daraufhin wird durch eine Betätigung des unverlierbaren Bedienelements 24 das Betätigungsmittel 48 aus der einen Federklemme 18 herausgeschoben, wodurch diese geschlossen wird und die optischen Fasern 14, 16 in ihrer Position fixiert werden. Die Verschiebehülse 108 wird mittels des entfernbaren Bedienelements 110 über die Klemmflügel 104, 106 der Jacketklemmeinheit 102 verschoben, wodurch das optische Kabel 94 in der Jacketklemmeinheit 102 fixiert wird. Das entfernbare Bedienelement 110 wird entfernt und das Knickschutzelement 112 auf das Gewinde 120 montiert.

### Bezugszeichen

- 10: Steckverbinder
- 12: Spleißeinheit
- 14: Optische Faser
- 16: Optische Faser
- 18: Federklemme
- 20: Betätigungselement
- 22: Gehäuseeinheit
- 24: Bedienelement
- 26: Gehäuseelement
- 28: Verschiebeteil
- 30: Element
- 32: Verschieberichtung
- 34: Haupterstreckungsrichtung
- 38: Verriegelungselement
- 40: Rastelement
- 42: Vorderes Gehäuseteil
- 44: Hinteres Gehäuseteil
- 45: Aufnahme
- 46: Ferrule
- 48: Betätigungsmittel
- 50: Rastklinke
- 52: Aufnahmebereich
- 54: Seitenwand
- 56: Seitenwand
- 57: Haupterstreckungsrichtung
- 58: Anschlag
- 60: Spleißelement
- 62: Mittelstück
- 64: Kontaktelement
- 66: Ferrulenaufnahme
- 68: Faserführungsstruktur
- 70: Nut
- 72: Mitte
- 73: Federarm
- 74: Einführhilfe
- 76: Einführhilfe
- 80: Bedienteil
- 82: Bereich
- 84: Steg
- 86: Steg
- 88: Aufnahmebereich
- 90: Verriegelungselement
- 92: Einbuchtung
- 94: Kabel
- 96: Klemmeinheit
- 98: Bedienfehlerschutzeinheit
- 100: Jacket
- 102: Jacketklemmeinheit
- 104: Klemmflügel
- 106: Klemmflügel
- 108: Verschiebehülse
- 110: Bedienelement
- 112: Knickschutzelement
- 114: Bereich
- 116: Ausnehmung
- 118: Nutenpaar
- 120: Gewinde
- 122: Endbereich
- 124: Bereich

## Patentansprüche

1. Steckverbindervorrichtung, insbesondere für einen feldkonfektionierbaren optischen Steckverbinder (10), zur Konfektionierung zumindest eines Kabels (94), mit zumindest einer Klemmeinheit (96), welche zu einer Fixierung des zumindest einen Kabels (94) vorgesehen ist, **gekennzeichnet durch** zumindest eine Bedienfehlerschutzeinheit (98), welche dazu vorgesehen ist, zumindest eine Bedienerhandlung lediglich dann zuzulassen, wenn die Fixierung des zumindest einen Kabels (94) **durch** die zumindest eine Klemmeinheit (96) vorliegt.

2. Steckverbindervorrichtung nach Anspruch 1, **dadurch gekennzeichnet, dass** die zumindest eine Klemmeinheit (96) wenigstens zu einer mechanischen Spleißung wenigstens zweier optischer Fasern (14, 16) vorgesehen ist.

3. Steckverbindervorrichtung nach Anspruch 1 oder 2, **dadurch gekennzeichnet, dass** die zumindest eine Klemmeinheit (96) wenigstens zu einer Klemmung zumindest eines Buffers und/oder zumindest eines Jackets (100) des zumindest einen Kabels (94) vorgesehen ist.

4. Steckverbindervorrichtung nach einem der vorhergehenden Ansprüche, **dadurch gekennzeichnet, dass** die Bedienfehlerschutzeinheit (98) zumindest ein unverlierbares Bedienelement (24) aufweist, welches zur Herstellung der Fixierung durch einen Bediener betätigbar ist.

5. Steckverbindervorrichtung nach Anspruch 4, **gekennzeichnet durch** eine Gehäuseeinheit (22), wobei das zumindest eine unverlierbare Bedienelement (24) in einem unbetätigten Zustand über eine Außenkontur der Gehäuseeinheit (22) hinausragt.

6. Steckverbindervorrichtung nach einem der vorhergehenden Ansprüche, **dadurch gekennzeichnet, dass** die zumindest eine Klemmeinheit (96) zumindest eine Spleißeinheit (12), welche dazu vorgesehen ist, eine mechanische Spleißung wenigstens zweier optischer Fasern (14, 16) herzustellen, und zumindest eine Federklemme (18), welche zu einer Fixierung der wenigstens zwei optischen Fasern (14, 16) in der zumindest einen Spleißeinheit (12) in einer Spleißposition durch zumindest eine Federkraft vorgesehen ist, aufweist.

7. Steckverbindervorrichtung zumindest nach Anspruch 4 und 6, **dadurch gekennzeichnet, dass** die zumindest eine Klemmeinheit (96) zumindest ein mit dem zumindest einen unverlierbaren Bedienelement (24) in Wirkverbindung stehendes Betätigungselement (20) aufweist, welches dazu vorgesehen ist, die zumindest eine Federklemme (18) entgegen der Federkraft wenigstens teilweise zu öffnen.

8. Steckverbindervorrichtung nach einem der vorhergehenden Ansprüche, **dadurch gekennzeichnet, dass** die zumindest eine Klemmeinheit (96) zumindest eine Jacketklemmeinheit (102) mit zumindest einem Klemmflügel (104, 106), welcher zu einer Klemmung zumindest eines Buffers und/oder zumindest eines Jackets (100) des zumindest einen Kabels (94) vorgesehen ist, und zumindest eine Verschiebehülse (108), welche dazu vorgesehen ist, den zumindest einen Klemmflügel (104, 106) zur Herstellung der Klemmung des zumindest eines Buffers und/oder des zumindest eines Jackets (100) auszulenken, aufweist.

9. Steckverbindervorrichtung nach Anspruch 8, **dadurch gekennzeichnet, dass** die zumindest eine Bedienfehlerschutzeinheit (98) zumindest ein entfernbares Bedienelement (110) aufweist, welches bei hergestellter Klemmung des zumindest eines Buffers und/oder des zumindest eines Jackets (100) entfernbar ist.

10. Steckverbindervorrichtung nach Anspruch 9, **dadurch gekennzeichnet, dass** das zumindest eine entfernbare Bedienelement (110) dazu vorgesehen ist, die zumindest eine Verschiebehülse (108) zur Herstellung der Klemmung zumindest teilweise über den zumindest einen Klemmflügel (104, 106) zu verschieben.

11. Steckverbindervorrichtung nach Anspruch 9 oder 10, **gekennzeichnet durch** zumindest ein Knickschutzelement (112), welches erst nach einem Entfernen des zumindest einen entfernbaren Bedienelements (110) montierbar ist.

12. Montagekit für einen Steckverbinder (10), insbesondere für einen feldkonfektionierbarer Steckverbinder, insbesondere LC-Steckverbinder oder SC-Steckverbinder oder LSH-Steckverbinder, mit zumindest einer Steckverbindervorrichtung nach einem der vorhergehenden Ansprüche.

13. Verfahren zur Feldkonfektionierung eines optischen Kabels (94) mit einem Montagekit für einen Steckverbinder (10) nach Anspruch 12.
